(19) **Europäisches Patentamt**
**European Patent Office**
**Office européen des brevets**

(11) **EP 2 730 598 A1**

(12) **EUROPÄISCHE PATENTANMELDUNG**

(43) Veröffentlichungstag:
**14.05.2014 Patentblatt 2014/20**

(21) Anmeldenummer: **12192196.9**

(22) Anmeldetag: **12.11.2012**

(51) Int Cl.:
**C08G 18/44** (2006.01)   **C08G 18/48** (2006.01)
**C08G 64/18** (2006.01)   **C08G 64/34** (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Bayer MaterialScience AG**
**51373 Leverkusen (DE)**

(72) Erfinder:
• **Dr. Kleszczewski, Bert**
  **51069 Köln (DE)**
• **Otten. Manduela**
  **51375 Leverkusen (DE)**

(74) Vertreter: **BIP Patents**
**c/o Bayer Intellectual Property GmbH**
**Creative Campus Monheim**
**Alfred-Nobel-Straße 10**
**40789 Monheim (DE)**

(54) **Verfahren zur Herstellung von Polyurethanweichschaumstoffen**

(57)    Die vorliegende Erfindung betrifft ein Verfahren zu Herstellung von Polyurethanweichschaumstoffen durch Reaktion einer Isocyanat-Komponente mit einer gegenüber Isocyanaten reaktiven Komponente, wobei die gegenüber Isocyanaten reaktive Komponente als Bestandteile zwei verschiedene Polyetherpolyole sowie ein Polyethercarbonatpolyol umfasst. In der gegenüber Isocyanaten reaktiven Komponente beträgt der Gesamtanteil an Ethylenoxid-Einheiten in den vorhandenen Polyolen ≥ 30 Gewichts-% bis ≤ 50 Gewichts-%, bezogen auf das Gesamtgewicht der vorhandenen Polyole. Vorzugsweise beträgt in der gegenüber Isocyanaten reaktiven Komponente der Gesamtanteil an aus Kohlendioxid stammenden Einheiten in den vorhandenen Polyolen ≥ 1 Gewichts-% bis ≤ 10 Gewichts-%, bezogen auf das Gesamtgewicht der vorhandenen Polyole. Die Erfindung betrifft weiterhin einen durch das Verfahren hergestellten Polyurethanweichschaumstoff ("hyperweicher Schaum", "hypersoft foam").

EP 2 730 598 A1

Printed by Jouve, 75001 PARIS (FR)

**Beschreibung**

Die vorliegende Erfindung betrifft ein Verfahren zu Herstellung von Polyurethanweichschaumstoffen durch Reaktion einer Isocyanat-Komponente mit einer gegenüber Isocyanaten reaktiven Komponente, wobei die gegenüber Isocyanaten reaktive Komponente als Bestandteile zwei verschiedene Polyetherpolyole sowie ein Polyethercarbonatpolyol umfasst. Die Erfindung betrifft weiterhin einen durch das erfindungsgemäße Verfahren hergestellten Polyurethanweichschaumstoff.

Eine Klasse von Polyurethanweichschaumstoffen wird im Markt als "hyperweiche Schäume" oder "hypersoft foams" bezeichnet. Gemäß US 6,063,309 unterscheiden sie sich von konventionellen Weichschaumstoffen dadurch, dass sie aus einer Kombination von Polyolen hergestellt werden, in der das mengenmäßig überwiegende Polyol einen hohen Gehalt an Oxyethylengruppen aufweist und das mengenmäßig in geringerem Umfang vorliegende Polyol einen niedrigen Gehalt an Oxyethylengruppen, so dass die Polyolkombination einen Oxyethylengruppengehalt von wenigstens 40% und typischerweise über 50% hat. Diese Schäume zeigen eine feinzellige Struktur und einen einzigartigen, samtartigen Griff.

FR 2172860 beschreibt die Herstellung von Weichschaumstoffen mit einer Kennzahl von größer als 100, ausgehend von einer Mischung zweier Polyetherpolyole, die insgesamt einen Gehalt an Ethylenoxideinheiten von 50-70% sowie an primären OH-Endgruppen von 45-55% und ein Verhältnis des Prozentgehalts an Ethylenoxideinheiten zum Prozentgehalt an primären Hydroxylendgruppen zwischen 1,1 und 1,3 aufweisen. Die aufgeführten Beispiele verwenden Mischungen von 70-85% eines hoch-EO-Gruppenhaltigen Polyols und 15-30% eines schwach-EO-Gruppenhaltigen Polyols.

US 4,143,004 betrifft die Herstellung von Weichschaumstoffen mit einer Kennzahl von 90 bis 98, ausgehend von einer Mischung zweier unmischbarer Polyetherpolyole, die insgesamt einen Gehalt an EO-Einheiten von 50-70%, eine OH-Zahl von 30-45 mg KOH/g und einen Gehalt an primären OH-Endgruppen zwischen 55 und 80% aufweisen.

Im Rahmen einer umweltfreundlichen Ausrichtung von Produktionsprozessen ist es generell wünschenswert, $CO_2$-basiert Ausgangsstoffe einsetzen zu können. Die vorliegende Erfindung hat sich die Aufgabe gestellt, ein Verfahren zur Herstellung von besonders weichen Polyurethanweichschaumstoffen anzugeben, bei dem wenigstens ein Teil der Polyetherpolyole durch Polyethercarbonatpolyole substituiert werden kann.

Erfindungsgemäß gelöst wurde die Aufgabe durch ein Verfahren zu Herstellung von Polyurethanweichschaumstoffen durch Reaktion einer Isocyanat-Komponente mit einer gegenüber Isocyanaten reaktiven Komponente, wobei die gegenüber Isocyanaten reaktive Komponente die folgenden Bestandteile umfasst:

A) ein oder mehrere Polyole mit einer durchschnittlichen OH-Funktionalität von ≥ 2 bis ≤ 3, erhältlich durch Copolymerisation von
≥ 50 Gewichts-% bis ≤ 85 Gewichts-% Ethylenoxid und ≥ 15 Gewichts-% bis ≤ 50 Gewichts-% Propylenoxid und/oder 1,2-Butylenoxid
in Gegenwart eines oder mehrerer Startermoleküls mit einer durchschnittlichen OH-Funktionalität von ≥ 2 bis ≤ 3, wobei die Gewichtsanteile sich auf das Gesamtgewicht von Ethylenoxid, Propylenoxid und 1,2-Butylenoxid beziehen und die Summe der Gewichtsanteile 100 Gewichts-% beträgt

B) ein oder mehrere Polyole mit einer durchschnittlichen OH-Funktionalität von ≥ 2 bis ≤ 6, erhältlich durch Copolymerisation von
≥ 1 Gewichts-% bis 25 ≤ Gewichts-% Ethylenoxid und ≥ 75 Gewichts-% bis ≤ 99 Gewichts-% Propylenoxid und/oder 1,2-Butylenoxid
in Gegenwart eines oder mehrerer Startermoleküls mit einer durchschnittlichen OH-Funktionalität von ≥ 2 bis ≤ 6, wobei die Gewichtsanteile sich auf das Gesamtgewicht von Ethylenoxid, Propylenoxid und/oder 1,2-Butylenoxid beziehen und die Summe der Gewichtsanteile 100 Gewichts-% beträgt

C) ein oder mehrere Polyole mit einer durchschnittlichen OH-Funktionalität von ≥ 1 bis ≤ 6, erhältlich durch Copolymerisation von
≥ 1 Gewichts-% bis ≤ Gewichts-30 % Kohlendioxid und ≥ 70 Gewichts-% bis ≤ 99 Gewichts-% Ethylenoxid und/oder Propylenoxid und/oder 1,2-Butylenoxid
in Gegenwart eines oder mehrerer Startermoleküls mit einer durchschnittlichen OH-Funktionalität von ≥ 1 bis ≤ 6, wobei die Gewichtsanteile sich auf das Gesamtgewicht von Kohlendioxid, Ethylenoxid, Propylenoxid und 1,2-Butylenoxid beziehen und die Summe der Gewichtsanteile 100 Gewichts-% beträgt

und wobei in der gegenüber Isocyanaten reaktiven Komponente der Gesamtanteil an EthylenoxidEinheiten in den vorhandenen Polyolen ≥ 30 Gewichts-% bis ≤ 50 Gewichts-%, bezogen auf das Gesamtgewicht der vorhandenen Polyole, beträgt.

Es wurde gefunden, dass sich mit dem erfindungsgemäßen Verfahren Polyurethanweichschaumstoffe herstellen lassen, welche viele oder alle Eigenschaften der hyperweichen Schäume aufweisen. Ihre Rohdichte gemäß DIN EN ISO 845 kann im Bereich von $\geq$ 10 kg/m$^3$ bis $\leq$ 150 kg/m$^3$, vorzugsweise von $\geq$ 20 kg/m$^3$ bis $\leq$ 70 kg/m$^3$ liegen und ihre Stauchhärte (40% Kompression) gemäß DIN EN ISO 1798 kann im Bereich von $\geq$ 0,3 kPa bis $\leq$ 4,0 kPa liegen.

Die Herstellung der Polyurethanweichschaumstoffe, bevorzugt Polyurethanweich-Blockschaumstoffe erfolgt nach bekannten Methoden. Die nachfolgend näher beschriebenen Komponenten können zur Herstellung der Polyurethanweichschaumstoffe eingesetzt werden.

Die Polyole A) weisen hinsichtlich der Massenanteile von Ethylenoxid und Propylenoxid/1,2-Butylenoxid eine Parität oder einen Überschuss an Ethylenoxid auf. Es kann sich um statistische oder um Block-Copolymere handeln. Werden die Alkylenoxide nacheinander dosiert, so enthalten die hergestellten Produkte (Polyetherpolyole) Polyetherketten mit Blockstrukturen. Produkte mit Ethylenoxidendblöcken sind beispielsweise durch erhöhte Konzentrationen an primären Endgruppen gekennzeichnet, welche den Systemen eine vorteilhafte Isocyanatreaktivität verleihen. Die Hydroxyl-Zahl (OH-Zahl) gemäß DIN 53240 kann beispielsweise $\geq$ 3 mg KOH/g bis $\leq$ 140 mg KOH/g betragen.

Die Herstellung der Verbindungen gemäß A) erfolgt durch Addition von Ethylenoxid beziehungsweise Propylenoxid/1,2-Butylenoxid an Starterverbindungen mit gegenüber Isocyanaten reaktionsfähigen Wasserstoffatomen. Beispiele für hydroxyfunktionelle Starterverbindungen sind Propylenglykol, Ethylenglykol, Diethylenglykol, Dipropylenglykol, 1,2-Butandiol, 1,3-Butandiol, 1,4-Butandiol, Hexandiol, Pentandiol, 3-Methyl-1,5-pentandiol, 1,12-Dodecandiol, Glycerin, Trimethylolpropan, Triethanolamin, Hydrochinon, Brenzcatechin, Resorcin, Bisphenol F, Bisphenol A, 1,3,5-Trihydroxybenzol, methylolgruppenhaltige Kondensate aus Formaldehyd und Phenol oder Melamin oder Harnstoff. Vorzugsweise wird als Starterverbindung Glycerin und/oder Trimethylolpropan eingesetzt.

Die Polyole B) weisen hinsichtlich der Massenanteile von Ethylenoxid und Propylenoxid/1,2-Butylenoxid einen Überschuss an Propylenoxid/1,2-Butylenoxid auf. Es kann sich um statistische oder um Block-Copolymere handeln. Werden die Alkylenoxide nacheinander dosiert, so enthalten die hergestellten Produkte (Polyetherpolyole) Polyetherketten mit Blockstrukturen. Die Hydroxyl-Zahl (OH-Zahl) gemäß DIN 53240 kann beispielsweise $\geq$ 3 mg KOH/g bis $\leq$ 140 mg KOH/g betragen.

Die Herstellung der Verbindungen gemäß B) erfolgt durch Addition von Ethylenoxid beziehungsweise Propylenoxid/1,2-Butylenoxid an Starterverbindungen mit gegenüber Isocyanaten reaktionsfähigen Wasserstoffatomen. Beispiele für hydroxyfunktionelle Starterverbindungen sind Propylenglykol, Ethylenglykol, Diethylenglykol, Dipropylenglykol, 1,2-Butandiol, 1,3-Butandiol, 1,4-Butandiol, Hexandiol, Pentandiol, 3-Methyl-1,5-pentandiol, 1,12-Dodecandiol, Glycerin, Trimethylolpropan, Triethanolamin, Pentaerythrit, Sorbitol, Saccharose, Hydrochinon, Brenzcatechin, Resorcin, Bisphenol F, Bisphenol A, 1,3,5-Trihydroxybenzol, methylolgruppenhaltige Kondensate aus Formaldehyd und Phenol oder Melamin oder Harnstoff. Vorzugsweise wird als Starterverbindung Glycerin und/oder Trimethylolpropan eingesetzt.

Die Polyole C) werden aus der Umsetzung von Kohlendioxid mit Ethylenoxid und/oder Propylenoxid und/oder 1,2-Butylenoxid mit geeigneten Startersubstanzen erhalten. Vorzugsweise erfolgt dieses in Gegenwart mindestens eines DMC-Katalysators (Doppelmetallcyanid-Katalysators). Die Hydroxyl-Zahl (OH-Zahl) gemäß DIN 53240 kann beispielsweise $\geq$ 3 mg KOH/g bis $\leq$ 140 mg KOH/g betragen.

Beispielsweise umfasst die Herstellung von Polyolen gemäß C), indem:

($\alpha$) die H-funktionelle Startersubstanz oder ein Gemisch aus mindestens zwei H-funktionellen Startersubstanzen vorgelegt und gegebenenfalls Wasser und/oder andere leicht flüchtige Verbindungen durch erhöhte Temperatur und/oder reduziertem Druck entfernt werden ("Trocknung"), wobei der DMC-Katalysator der H-funktionellen Startersubstanz oder dem Gemisch von mindestens zwei H-funktionellen Startersubstanzen vor oder nach der Trocknung zugesetzt wird,

($\beta$) zur Aktivierung eine Teilmenge (bezogen auf die Gesamtmenge der bei der Aktivierung und Copolymerisation eingesetzten Menge an Alkylenoxiden) von einem oder mehreren Alkylenoxiden zu der aus Schritt ($\alpha$) resultierenden Mischung zugesetzt wird, wobei diese Zugabe einer Teilmenge an Alkylenoxid gegebenenfalls in Gegenwart von CO$_2$ erfolgen kann, und wobei dann die aufgrund der folgenden exothermen chemischen Reaktion auftretende Temperaturspitze ("Hotspot") und/oder ein Druckabfall im Reaktor jeweils abgewartet wird, und wobei der Schritt ($\beta$) zur Aktivierung auch mehrfach erfolgen kann,

($\gamma$) ein oder mehrere der Alkylenoxide und Kohlendioxid zu der aus Schritt ($\beta$) resultierenden Mischung zugesetzt werden, wobei die in Schritt ($\gamma$) eingesetzten Alkylenoxide gleich oder verschieden sein können von den bei Schritt ($\beta$) eingesetzten Alkylenoxiden.

Als geeignete H-funktionelle Startsubstanz können Verbindungen mit für die Alkoxylierung aktiven H-Atomen eingesetzt werden. Für die Alkoxylierung aktive Gruppen mit aktiven H-Atomen sind beispielsweise -OH, -NH$_2$ (primäre Amine), -NH- (sekundäre Amine), -SH und -CO$_2$H, bevorzugt sind -OH und -NH$_2$, besonders bevorzugt ist -OH. Als H-funktionelle Startersubstanz wird beispielsweise eine oder mehrere Verbindungen ausgewählt aus der Gruppe bestehend aus ein- oder mehrwertige Alkohole, mehrwertige Amine, mehrwertige Thiole, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine (z. B. sogenannte Jeffamine® von Huntsman, wie z. B. D-230, D-400, D-2000, T-403, T-3000, T-5000 oder entsprechende Produkte der BASF, wie z. B. Polyetheramin D230, D400, D200, T403, T5000), Polytetrahydrofurane (z. B. PolyTHF® der BASF, wie z. B. PolyTHF® 250, 650S, 1000, 1000S, 1400, 1800, 2000), Polytetrahydrofuranamine (BASF Produkt Polytetrahydrofuranamin 1700), Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und $C_1$-$C_{24}$ Alkyl-Fettsäureester, die im Mittel mindestens 2 OH-Gruppen pro Molekül enthalten, eingesetzt.. Beispielhaft handelt es sich bei den $C_1$-$C_{24}$ Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als monofunktionelle Starterverbindungen können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, tert-Butanol, 3-Buten-1-ol, 3-Butin-1-ol, 2-Methyl-3-buten-2-ol, 2-Methyl-3-butin-2-ol, Propagylalkohol, 2-Methyl-2-propanol, 1-tert-Butoxy-2-propanol., 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, tert-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Startersubstanzen geeignete mehrwertige Alkohole sind beispielsweise zweiwertige Alkohole (wie beispielweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentantandiol, Methylpentandiole (wie beispielweise 3-Methyl-1,5-pentandiol), 1,6-Hexandiol; 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielweise Trimethylolpropan, Glycerin, Trishydroxyethylisocyanurat, Rizinusöl); vierwertige Alkohole (wie beispielsweise Pentaerythrit); Polyalkohole (wie beispielweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvorgenannten Alkohole mit unterschiedlichen Mengen an ε-Caprolacton.

Die H-funktionellen Startersubstanzen können auch aus der Substanzklasse der Polyetherpolyole ausgewählt sein, insbesondere solchen mit einem Molekulargewicht Mn im Bereich von 100 bis 4000 g/mol. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen®-, Acclaim®-, Arcol®-, Baycoll®-, Bayfill®-, Bayflex®- Baygal®-, PET®- und Polyether-Polyole der Bayer MaterialScience AG (wie z. B. Desmophen® 3600Z, Desmophen® 1900U, Acclaim® Polyol 2200, Acclaim® Polyol 4000I, Arcol® Polyol 1004, Arcol® Polyol 1010, Arcol® Polyol 1030, Arcol® Polyol 1070, Baycoll® BD 1110, Bayfill® VPPU 0789, Baygal® K55, PET® 1004, Polyether® S180). Weitere geeignete homo-Polyethylenoxide sind beispielsweise die Pluriol® E-Marken der BASF SE, geeignete homo-Polypropylenoxide sind beispielsweise die Pluriol® P-Marken der BASF SE, geeignete gemischte Copolymere aus Ethylenoxid und Propylenoxid sind beispielsweise die Pluronic® PE oder Pluriol® RPE-Marken der BASF SE.

Die H-funktionellen Startersubstanzen können auch aus der Substanzklasse der Polyesterpolyole ausgewählt sein, insbesondere solchen mit einem Molekulargewicht Mn im Bereich von 200 bis 4500 g/mol. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z. B. Bernsteinsäure, Maleinsäure, Maleinsäureanhydrid, Adipinsäure, Phthalsäureanhydrid, Phthalsäure, Isophthalsäure, Terephthalsäure, Tetrahydrophthalsäure, Tetrahydrophthalsäureanhydrid, Hexahydrophthalsäureanhydrid oder Gemische aus den genannten Säuren und/oder Anhydride eingesetzt. Als Alkoholkomponenten werden z. B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole die ebenfalls als Startersubstanzen zur Herstellung der Polyethercarbonatpolyole dienen können. Bevorzugt werden Polyetherpolyole mit Mn = 150 bis 2000 g/mol zur Herstellung der Polyesteretherpolyole eingesetzt.

Des weiteren können als H-funktionelle Startersubstanzen Polycarbonatpolyole (wie beispielsweise Polycarbonatdiole) eingesetzt werden, insbesondere solchen mit einem Molekulargewicht Mn im Bereich von 150 bis 4500 g/mol, vorzugsweise 500 bis 2500, die beispielsweise durch Umsetzung von Phosgen, Dimethylcarbonat, Diethylcarbonat oder Diphenylcarbonat und di- und/oder polyfunktionellen Alkoholen oder Polyesterpolyolen oder Polyetherpolyolen hergestellt werden. Beispiele zu Polycarbonatpolyolen finden sich z. B. in der EP-A 1359177. Beispielsweise können als Polycarbonatdiole die Desmophen® C-Typen der Bayer MaterialScience AG verwendet werden, wie z. B. Desmophen® C 1100 oder Desmophen® C 2200. Besonders bevorzugt ist Glycerin als Startersubstanz.

Geeignete Isocyanat-Komponenten sind unter anderem die technisch leicht zugänglichen Polyisocyanate, zum Beispiel das 2,4- und 2,6-Toluylendiisocyanat, sowie beliebige Gemische dieser Isomeren ("TDI"); Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten. Vorzugsweise wird als Polyisocyanat mindestens eine Verbindung ausgewählt aus der Gruppe bestehend aus 2,4- und 2,6-Toluylendiisocyanat, 4,4'- und 2,4'- und 2,2'-Diphenylmethandiisocyanat und Polyphenylpolymethylenpolyisocyanat ("Mehrkern-MDI") eingesetzt.

Selbstverständlich können weiterhin in der Polyurethanschaum-Herstellung übliche Katalysatoren und Additive wie Stabilisatoren, etc. mit verwendet werden.

Als Katalysatoren werden bevorzugt aliphatische tertiäre Amine (beispielsweise Trimethylamin, Tetramethylbutandiamin), cycloaliphatische tertiäre Amine (beispielsweise 1,4-Diaza(2,2,2)bicyclooctan), aliphatische Aminoether (beispielsweise Dimethylaminoethylether und N,N,N-Trimethyl-N-hydroxyethyl-bisaminoethylether), cycloaliphatische Aminoether (beispielsweise N-Ethylmorpholin), aliphatische Amidine, cycloaliphatische Amidine, Harnstoff, Derivate des Harnstoffs (wie beispielsweise Aminoalkylharnstoffe, siehe zum Beispiel EP-A 0 176 013, insbesondere (3-Dimethylaminopropylamin)-harnstoff) und Zinn-Katalysatoren (wie beispielsweise Dibutylzinnoxid, Dibutylzinndilaurat, Zinnoctoat).

Als Katalysatoren werden besonders bevorzugt

a) Harnstoff, Derivate des Harnstoffs und/oder

b) Amine und Aminoether, welche jeweils eine funktionelle Gruppe enthalten, die mit dem Isocyanat chemisch reagiert. Vorzugsweise ist die funktionelle Gruppe eine Hydroxyl-Gruppe, eine primäre oder sekundäre Aminogruppe. Diese besonders bevorzugten Katalysatoren haben den Vorteil, dass diese ein stark reduziertes Migrations- und Emissionsverhalten aufweisen.

Erfindungsgemäß können auch organische Metallverbindungen, insbesondere organische Zinnverbindungen, als Katalysatoren, verwendet werden. Als organische Zinnverbindungen kommen neben schwefelhaltigen Verbindungen wie Di-n-octyl-zinnmercaptid (DE-A 17 69 367; US-A 3 645 927) vorzugsweise Zinn(II)salze von Carbonsäuren wie Zinn(II)ricinoleat, Zinn(II)-Salze con C9-bis C16-Carbonsäuren, Zinn(II)acetat, Zinn(II)octoat, Zinn(II)ethylhexanoat und Zinn(II)laurat und Zinn(IV)-Verbindungen, z.B. Dibutylzinnoxid, Dibutylzinndichlorid, Dibutylzinndiacetat, Dibutylzinndilaurat, Dibutylzinnmaleat oder Dioctylzinndiacetat in Betracht. Selbstverständlich können alle oben genannten Katalysatoren als Gemische eingesetzt werden.

Als Beispiele für geeignete Katalysatoren seien genannt: (3-Dimethylaminopropylamin)-Harnstoff, 2-(2-Dimethylaminoethoxy)ethanol, N,N-Bis(3-dimethylaminopropyl)-N-isopropanolamin, N,N,N-Trimethyl-N-hydroxyethyl-bisaminoethylether und 3-Dimethylaminopropylamin.

Es ist möglich, dass in den Polyolen A), B) und C) keine aus 1,2-Butylenoxid resultierenden Einheiten vorkommen.

Weitere Aspekte und Ausführungsformen der vorliegenden Erfindung werden nachfolgend beschrieben. Sie können beliebig miteinander kombiniert werden, sofern sich aus dem Zusammenhang nicht eindeutig das Gegenteil ergibt.

In einer Ausführungsform des erfindungsgemäßen Verfahrens beträgt in der gegenüber Isocyanaten reaktiven Komponente der Gesamtanteil an aus Kohlendioxid stammenden Einheiten in den vorhandenen Polyolen $\geq 1$ Gewichts-% bis $\leq 10$ Gewichts-%, bezogen auf das Gesamtgewicht der vorhandenen Polyole. Vorzugsweise beträgt dieser Anteil $\geq 1,5$ Gewichts-% bis $\leq 5$ Gewichts-%, mehr bevorzugt $\geq 2$ Gewichts-% bis $\leq 4$ Gewichts-%.

Der Anteil an eingebautem $CO_2$ ("aus Kohlendioxid stammende Einheiten") in einem Polyethercarbonatpolyol lässt sich aus der Auswertung charakteristischer Signale im $^1$H-NMR-Spektrum bestimmen. Das nachfolgende Beispiel illustriert die Bestimmung des Anteils an aus Kohlendioxid stammenden Einheiten in einem auf 1,8-Octandiol gestarteten $CO_2$/Propylenoxid-Polyethercarbonatpolyol.

Der Anteil an eingebautem $CO_2$ in einem Polyethercarbonatpolyol sowie das Verhältnis von Propylencarbonat zu Polyethercarbonatpolyol kann mittels $^1$H-NMR (ein geeignetes Gerat ist von der Firma Bruker, DPX 400, 400 MHz; Pulsprogramm zg30, Wartezeit d1: 10s, 64 Scans) bestimmt werden. Die Probe wird jeweils in deuteriertem Chloroform gelöst. Die relevanten Resonanzen im $^1$H-NMR (bezogen auf TMS = 0 ppm) sind wie folgt:

Cyclisches Carbonat (welches als Nebenprodukt gebildet wurde) mit Resonanz bei 4,5 ppm; Carbonat, resultierend aus im Polyethercarbonatpolyol eingebautem Kohlendioxid mit Resonanzen bei 5,1 bis 4,8 ppm; nicht abreagiertes PO mit Resonanz bei 2,4 ppm; Polyetherpolyol (d.h. ohne eingebautes Kohlendioxid) mit Resonanzen bei 1,2 bis 1,0 ppm; das als Startermolekül (soweit vorhanden) eingebaute 1,8 Octandiol mit einer Resonanz bei 1,6 bis 1,52 ppm.

Der Molenanteil des im Polymer eingebauten Carbonats in der Reaktionsmischung wird nach Formel (I) wie folgt berechnet, wobei folgende Abkürzungen verwendet werden:

F(4,5) = Fläche der Resonanz bei 4,5 ppm für cyclisches Carbonat (entspricht einem H Atom)
F(5,1-4,8) = Fläche der Resonanz bei 5,1-4,8 ppm für Polyethercarbonatpolyol und einem H-Atom für cyclisches Carbonat.
F(2,4) = Fläche der Resonanz bei 2,4 ppm für freies, nicht abreagiertes PO
F(1,2-1,0) = Fläche der Resonanz bei 1,2-1,0 ppm für Polyetherpolyol
F(1,6-1,52) = Fläche der Resonanz bei 1,6 bis 1,52 ppm für 1,8 Octandiol (Starter), soweit vorhanden

Unter Berücksichtigung der relativen Intensitäten wurde gemäß der folgenden Formel (XIV) für das polymer gebundene Carbonat ("lineares Carbonat" LC) in der Reaktionsmischung in mol% umgerechnet:

$$LC = \frac{F(5,1-4,8) - F(4,5)}{F(5,1-4,8) + F(2,4) + 0,33 * F(1,2-1,0) + 0,25 * F(1,6-1,52)} * 100 \qquad (I)$$

Der Gewichtsanteil (in Gew.-%) polymer-gebundenen Carbonats (LC') in der Reaktionsmischung wurde nach Formel (II) berechnet,

$$LC' = \frac{[F(5,1-4,8) - F(4,5)] * 102}{N} * 100\% \qquad (II)$$

wobei sich der Wert für N ("Nenner" N) nach Formel (III) berechnet:

$$N = [F(5,1-4,8) - F(4,5)] * 102 + F(4,5) * 102 + F(2,4) * 58 + 0,33 * F(1,2-1,0) * 58 + 0,25 * F(1,6-1,52) * 146$$

$$(III)$$

Der Faktor 102 resultiert aus der Summe der Molmassen von $CO_2$ (Molmasse 44 g/mol) und der von Propylenoxid (Molmasse 58 g/mol), der Faktor 58 resultiert aus der Molmasse von Propylenoxid und der Faktor 146 resultiert aus der Molmasse des eingesetzten Starters 1,8-Octandiol (soweit vorhanden).
Der Gewichtsanteil (in Gew.-%) an cyclischem Carbonat (CC') in der Reaktionsmischung wurde nach Formel (IV) berechnet,

$$CC' = \frac{F(4,5) * 102}{N} * 100\% \qquad (IV)$$

wobei sich der Wert für N nach Formel (III) berechnet.
Um aus den Werten der Zusammensetzung der Reaktionsmischung die Zusammensetzung bezogen auf den Polymer-Anteil (bestehend aus Polyetherpolyol, welches aus Starter und Propylenoxid während der unter $CO_2$-freien Bedingungen stattfindenden Aktivierungsschritten aufgebaut wurde, und Polyethercarbonatpolyol, aufgebaut aus Starter, Propylenoxid und Kohlendioxid während den in Gegenwart von $CO_2$ stattfindenden Aktivierungsschritten und während der Copolymerisation) zu berechnen, wurden die Nicht-Polymer-Bestandteile der Reaktionsmischung (d.h. cyclisches Propylencarbonat sowie ggf. vorhandenes, nicht umgesetztes Propylenoxid) rechnerisch eliminiert. Der Gewichtsanteil der Carbonat-Wiederholungseinheiten im Polyethercarbonatpolyol wurde in einen Gewichtsanteil Kohlendioxid mittels des Faktors F = 44/(44+58) umgerechnet. Die Angabe des $CO_2$-Gehalts im Polyethercarbonatpolyol ist normiert auf den Anteil des Polyethercarbonatpolyol-Moleküls, das bei der Copolymerisation und ggf. den Aktivierungsschritten in Gegenwart von $CO_2$ gebildet wurde (d.h. der Anteil des Polyethercarbonatpolyol-Moleküls, der aus dem Starter (1,8-Octandiol, soweit vorhanden) sowie aus der Reaktion des Starters mit Epoxid resultiert, das unter $CO_2$-freien Bedingungen zugegeben wurde, wurde hierbei nicht berücksichtigt).

In einer weiteren Ausführungsform des erfindungsgemäßen Verfahrens liegen die Polyole gemäß A), B) und C) in den folgenden Gewichtsanteilen zueinander vor: ≥ 45 Gewichts-% bis ≤ 65 Gewichts-% (bevorzugt ≥ 50 Gewichts-% bis ≤ 60 Gewichts-%) A), ≥ 15 Gewichts-% bis ≤ 35 Gewichts-% (bevorzugt ≥ 20 Gewichts-% bis ≤ 30 Gewichts-%) B) und ≥ 15 Gewichts-% bis ≤ 35 Gewichts-% (bevorzugt ≥ 20 Gewichts-% bis ≤ 30 Gewichts-%) C), wobei Gewichtsanteile sich auf das Gesamtgewicht der Polyole gemäß A), B) und C) beziehen und die Summe der Gewichtsanteile ≤ 100 Gewichts-% beträgt.

In einer weiteren Ausführungsform des erfindungsgemäßen Verfahrens weist der Polyurethanweichschaumstoff eine Stauchhärte (40% Kompression) gemäß DIN EN ISO 1798 von ≥ 0,3 kPa bis ≤ 4,0 kPa, vorzugsweise ≥ 0,7 kPa bis ≤ 3,0 kPa und besonders bevorzugt ≥ 0,8 kPa bis ≤ 2,5 kPa auf.

In einer weiteren Ausführungsform des erfindungsgemäßen Verfahrens beträgt das molare Verhältnis von in der Isocyanat-Komponente vorliegenden NCO-Gruppen zu in der gegenüber Isocyanaten reaktiven Komponente vorliegenden OH-Gruppen ≥ 85:100 bis ≤ 105:100. Vorzugsweise liegt dieser NCO-Index in einem Bereich von ≥ 90:100 bis ≤ 100:100.

In einer weiteren Ausführungsform des erfindungsgemäßen Verfahrens findet die Reaktion in Gegenwart eines Katalysators oder mehrerer Katalysatoren statt, die ausgewählt sind aus der Gruppe der Amine, Aminoether und/oder Zinn(II)-Verbindungen. Bevorzugte Katalysatoren sind Bis-(2-dimethylamino-ethyl)-ether, Triethylendiamin und/oder Zinn(II)-ethylhexanoat. Besonders bevorzugt ist eine Kombination dieser drei Substanzen.

In einer weiteren Ausführungsform des erfindungsgemäßen Verfahrens findet die Reaktion in Gegenwart von Wasser als Treibmittel statt. Es ist möglich, aber nicht bevorzugt, dass weitere physikalische oder chemische Treibmittel anwesend sind.

In einer weiteren Ausführungsform des erfindungsgemäßen Verfahrens umfasst die Isocyanat-Komponente monomeres Diphenylmethandiisocyanat, oligomeres Diphenylmethandiisocyanat, polymeres Diphenylmethandiisocy-anat und/oder Toluylendiisocyanat. Bevorzugt ist ein als TDI-80 bezeichnetes Isomerengemisch Gemisch aus 80 Gewichts-% 2,4- und 20 Gewichts-% 2,6-TDI.

In einer weiteren Ausführungsform des erfindungsgemäßen Verfahrens weisen das oder die Polyole gemäß A) eine Hydroxylzahl von ≥ 30 mg KOH/g bis ≤ 50 mg KOH/g auf und sind erhältlich durch Copolymerisation von ≥ 70 Gewichts-% bis ≤ 80 Gewichts-% Ethylenoxid und ≥ 20 Gewichts-% bis ≤ 30 Gewichts-% Propylenoxid in Gegenwart von Glycerin, wobei die Gewichtsanteile sich auf das Gesamtgewicht von Ethylenoxid und Propylenoxid beziehen und die Summe der Gewichtsanteile ≤ 100 Gewichts-% beträgt. Die Hydroxylzahl kann gemäß DIN 53240 bestimmt werden.

In einer weiteren Ausführungsform des erfindungsgemäßen Verfahrens weisen das oder die Polyole gemäß B) eine Hydroxylzahl von ≥ 40 mg KOH/g bis ≤ 60 mg KOH/g auf und sind erhältlich durch Copolymerisation von ≥ 5 Gewichts-% bis ≤ 15 Gewichts-% Ethylenoxid und ≥ 15 Gewichts-% bis ≤ 95 Gewichts-% Propylenoxid in Gegenwart von Glycerin, wobei die Gewichtsanteile sich auf das Gesamtgewicht von Ethylenoxid und Propylenoxid beziehen und die Summe der Gewichtsanteile 100 Gewichts-% beträgt. Die Hydroxylzahl kann gemäß DIN 53240 bestimmt werden.

In einer weiteren Ausführungsform des erfindungsgemäßen Verfahrens weisen das oder die Polyole gemäß C) eine Hydroxylzahl von ≥ 45 mg KOH/g bis ≤ 65 mg KOH/g auf und erhältlich sind durch Copolymerisation von ≥ 10 Gewichts-% bis ≤ 20 Gewichts-% Kohlendioxid und ≥ 80 Gewichts-% bis ≤ 90 Gewichts-% Propylenoxid in Gegenwart von Glycerin, wobei die Gewichtsanteile sich auf das Gesamtgewicht von Kohlendioxid und Propylenoxid beziehen und die Summe der Gewichtsanteile 100 Gewichts-% beträgt. Die Hydroxylzahl kann gemäß DIN 53240 bestimmt werden.

In einer weiteren Ausführungsform des erfindungsgemäßen Verfahrens beträgt in dem Polyol C) der molare Gesamt-Anteil von sekundären Hydroxylgruppen ≥ 50 mol-% bis ≤ 95 mol-%. Das Verhältnis von primären zu sekundären OH-Endgruppen lässt sich aus den $^1$H-NMR-Spektren der betreffenden Verbindungen ermitteln.

Die vorliegende Erfindung betrifft weiterhin einen Polyurethanweichschaum, welcher durch ein erfindungsgemäßes Verfahren erhältlich ist. Dessen Rohdichte gemäß DIN EN ISO 845 kann im Bereich von ≥ 10 kg/m$^3$ bis ≤ 150 kg/m$^3$, vorzugsweise von ≥ 20 kg/m$^3$ bis ≤ 70 kg/m$^3$ liegen.

In einer Ausführungsform des erfindungsgemäßen Polyurethanweichschaums weist dieser eine Stauchhärte (40% Kompression) gemäß DIN EN ISO 1798 von ≥ 0,3 kPa bis ≤ 4,0 kPa, vorzugsweise ≥ 0,7 kPa bis ≤ 3,0 kPa, mehr bevorzugt ≥ 1,2 kPa bis ≤ 5 kPa und besonders bevorzugt ≥ 0,8 kPa bis ≤ 2,5 kPa auf.

Die vorliegende Erfindung wird anhand der nachfolgenden Beispiele weiter erläutert werden, ohne jedoch darauf beschränkt zu sein. Es bedeuten:

Polyol A: trifunktionelles Polyetherpolyol auf Basis Glycerin mit Hydroxylzahl 37 mg KOH/g, aus 75 Gewichts-%% Ethylenoxid und 25 Gewichts-% Propylenoxid

Polyol B: trifunktionelles Polyetherpolyol auf Basis Glycerin mit Hydroxylzahl 48 mg KOH/g, aus 12 Gewichts-% Ethylenoxid und 88 Gewichts% Propylenoxid

Polyol C: trifunktionelles Polyol auf Basis Glycerin mit Hydroxylzahl 56 mg KOH/g, erhalten durch Copolymerisation von 15 Gewichts-% Kohlendioxid mit 85 Gewichts-% Propylenoxid. Der Gehalt an sekundären endständigen Hydroxylgruppen betrug 87 mol-%.

Stabilisator 1: Siloxan-basierter Schaumstabilisator Tegostab® BF 2370, Evonik Goldschmidt

Isocyanat 1: Gemisch aus 80 Gewichts-% 2,4- und 20 Gewichts-% 2,6-Toluylendiisocyanat, erhältlich unter dem Namen Desmodur® T 80, Bayer MaterialScience AG

Katalysator 1: Bis-(2-dimethylamino-ethyl)-ether in Dipropylenglykol, erhältlich als Addocat® 108, Fa. Rheinchemie

Katalysator 2: Triethylendiamin in Dipropylenglykol, erhältlich als Addocat® 105, Fa. Rheinchemie

Katalysator 3: Zinn(II)-ethylhexanoat, erhältlich als Dabco® T-9, Fa. Air Products

Es wurden Polyurethanschäume gemäß den in den nachfolgenden Tabellen angegebenen Rezepturen hergestellt. Aufgeführt sind die Anteile der Komponenten in Gewichts-Teilen. Beispiele Nr. 1, 2 und 4 sind Vergleichsbeispiele, Beispiele 3, 5, 6 und 7 sind erfindungsgemäße Beispiele. Die Angaben "$CO_2$-Anteil im Gemisch", Propylenoxidanteil im Gemisch" und "Ethylenoxidanteil im Gemisch" bezeichnen den jeweiligen Anteil, ausgedrückt in Gewichts-%, im gegenüber Isocyanaten reaktiven Polyolgemisch (Polyole A, B, C gemäß Rezeptur). Die Rohdichte wurde gemäß DIN EN ISO 845, die Stauchhärte (40% Kompression) gemäß DIN EN ISO 1798 ermittelt.

| Beispiel | 1 (Vgl.) | 2 (Vgl.) | 3 | 4 (Vgl.) |
|---|---|---|---|---|
| Polyol A | 75 | 75 | 60 | 75 |
| Polyol B | 25 | | 20 | 12,5 |
| Polyol C | | 25 | 20 | 12,5 |
| Stabilisator 1 | 2,4 | 1,2 | 2,4 | 1,2 |
| Katalysator 1 | 0,05 | 0,05 | 0,05 | 0,05 |
| Katalysator 2 | 0,15 | 0,15 | 0,15 | 0,15 |
| Katalysator 3 | 0,05 | 0,07 | 0,07 | 0,07 |
| Wasser | 4,5 | 4,5 | 4,5 | 4,5 |
| Isocyanat 1 | 48 | 48,2 | 48,2 | 48,1 |
| Index | 96 | 96 | 96 | 96 |
| Steigzeit (s) | 120 | (kollabiert) | 110 | (kollabiert) |
| Rohdichte | 23,6 | | 22,8 | |
| Stauchhärte (kPa) | 1,92 | | 1,71 | |
| $CO_2$-Anteil im Gemisch (%) | 0 | 4 | 3 | 6 |
| Propylenoxidanteil im Gemisch (%) | 41 | 40 | 50 | 40 |
| Ethylenoxidanteil im Gemisch (%) | 59 | 56 | 47 | 58 |

| Beispiel | 5 | 6 | 7 |
|---|---|---|---|
| Polyol A | 60 | 50 | 50 |

(fortgesetzt)

| Beispiel | 5 | 6 | 7 |
|---|---|---|---|
| Polyol B | 25 | 25 | 30 |
| Polyol C | 15 | 25 | 20 |
| Stabilisator 1 | 2,4 | 2,4 | 2,4 |
| Katalysator 1 | 0,05 | 0,05 | 0,05 |
| Katalysator 2 | 0,15 | 0,15 | 0,15 |
| Katalysator 3 | 0,05 | 0,05 | 0,05 |
| Wasser | 4,5 | 4,5 | 4,5 |
| Isocyanat 1 | 48,2 | 48,5 | 48,4 |
| Index | 96 | 96 | 96 |
| Steigzeit (s) | 120 | 120 | 120 |
| Rohdichte | 24,0 | 24,2 | 24,1 |
| Stauchhärte (kPa) | 1,99 | 2,36 | 2,17 |
| $CO_2$-Anteil im Gemisch (%) | 2 | 4 | 3 |
| Propylenoxidanteil im Gemisch (%) | 50 | 56 | 56 |
| Ethylenoxidanteil im Gemisch (%) | 48 | 40 | 41 |

**Patentansprüche**

1. Verfahren zu Herstellung von Polyurethanweichschaumstoffen durch Reaktion einer Isocyanat-Komponente mit einer gegenüber Isocyanaten reaktiven Komponente, wobei die gegenüber Isocyanaten reaktive Komponente die folgenden Bestandteile umfasst:

A) ein oder mehrere Polyole mit einer durchschnittlichen OH-Funktionalität von $\geq 2$ bis $\leq 3$, erhältlich durch Copolymerisation von

$\geq 50$ Gewichts-% bis $\leq 85$ Gewichts-% Ethylenoxid und $\geq 15$ Gewichts-% bis $\leq 50$ Gewichts-% Propylenoxid und/oder 1,2-Butylenoxid

in Gegenwart eines oder mehrerer Startermoleküls mit einer durchschnittlichen OH-Funktionalität von $\geq 2$ bis $\leq 3$, wobei die Gewichtsanteile sich auf das Gesamtgewicht von Ethylenoxid, Propylenoxid und 1,2-Butylenoxid beziehen und die Summe der Gewichtsanteile 100 Gewichts-% beträgt

B) ein oder mehrere Polyole mit einer durchschnittlichen OH-Funktionalität von $\geq 2$ bis $\leq 6$, erhältlich durch Copolymerisation von

$\geq 1$ Gewichts-% bis $25 \leq$ Gewichts-% Ethylenoxid und $\geq 75$ Gewichts-% bis $\leq 99$ Gewichts-% Propylenoxid und/oder 1,2-Butylenoxid

in Gegenwart eines oder mehrerer Startermoleküls mit einer durchschnittlichen OH-Funktionalität von $\geq 2$ bis $\leq 6$, wobei die Gewichtsanteile sich auf das Gesamtgewicht von Ethylenoxid, Propylenoxid und/oder 1,2-Butylenoxid beziehen und die Summe der Gewichtsanteile 100 Gewichts-% beträgt

C) ein oder mehrere Polyole mit einer durchschnittlichen OH-Funktionalität von $\geq 1$ bis $\leq 6$, erhältlich durch Copolymerisation von

$\geq 1$ Gewichts-% bis $\leq$ Gewichts-30 % Kohlendioxid und $\geq 70$ Gewichts-% bis $\leq 99$ Gewichts-% Ethylenoxid und/oder Propylenoxid und/oder 1,2-Butylenoxid

in Gegenwart eines oder mehrerer Startermoleküls mit einer durchschnittlichen OH-Funktionalität von $\geq 1$ bis $\leq 6$, wobei die Gewichtsanteile sich auf das Gesamtgewicht von Kohlendioxid, Ethylenoxid, Propylenoxid und 1,2-Butylenoxid beziehen und die Summe der Gewichtsanteile 100 Gewichts-% beträgt

und wobei in der gegenüber Isocyanaten reaktiven Komponente der Gesamtanteil an EthylenoxidEinheiten in den vorhandenen Polyolen $\geq 30$ Gewichts-% bis $\leq 50$ Gewichts-%, bezogen auf das Gesamtgewicht der vorhandenen Polyole, beträgt.

2. Verfahren gemäß Anspruch 2, wobei in der gegenüber Isocyanaten reaktiven Komponente der Gesamtanteil an aus Kohlendioxid stammenden Einheiten in den vorhandenen Polyolen ≥ 1 Gewichts-% bis ≤ 10 Gewichts-%, bezogen auf das Gesamtgewicht der vorhandenen Polyole, beträgt.

3. Verfahren gemäß Anspruch 1 oder 2, wobei die Polyole gemäß A), B) und C) in den folgenden Gewichtsanteilen zueinander vorliegen: ≥ 45 Gewichts-% bis ≤ 65 Gewichts-% A), ≥ 15 Gewichts-% bis ≤ 35 Gewichts-% B) und ≥ 15 Gewichts-% bis ≤ 35 Gewichts-% C), wobei die Gewichtsanteile sich auf das Gesamtgewicht der Polyole gemäß A), B) und C) beziehen und die Summe der Gewichtsanteile 100 Gewichts-% beträgt.

4. Verfahren gemäß einem oder mehreren der Ansprüche 1 bis 3, wobei der Polyurethanweichschaumstoff eine Stauchhärte (40% Kompression) gemäß DIN EN ISO 1798 von ≥ 0,3 kPa bis ≤ 4,0 kPa aufweist.

5. Verfahren gemäß einem oder mehreren der Ansprüche 1 bis 4, wobei das molare Verhältnis von in der Isocyanat-Komponente vorliegenden NCO-Gruppen zu in der gegenüber Isocyanaten reaktiven Komponente vorliegenden OH-Gruppen ≥ 85:100 bis ≤ 105:100 beträgt.

6. Verfahren gemäß einem oder mehreren der Ansprüche 1 bis 5, wobei die Reaktion in Gegenwart eines Katalysators oder mehrerer Katalysatoren stattfindet, die ausgewählt sind aus der Gruppe der Amine, Aminoether und/oder Zinn(II)-Verbindungen.

7. Verfahren gemäß einem oder mehreren der Ansprüche 1 bis 6, wobei die Reaktion in Gegenwart von Wasser als Treibmittel stattfindet.

8. Verfahren gemäß einem oder mehreren der Ansprüche 1 bis 7, wobei die Isocyanat-Komponente monomeres Diphenylmethandiisocyanat, oligomeres Diphenylmethandiisocyanat, polymeres Diphenylmethandiisocyanat und/oder Toluylendiisocyanat umfasst.

9. Verfahren gemäß einem oder mehreren der Ansprüche 1 bis 8, wobei das oder die Polyole gemäß A) eine Hydroxylzahl von ≥ 30 mg KOH/g bis ≤ 50 mg KOH/g aufweisen und erhältlich sind durch Copolymerisation von ≥ 70 Gewichts-% bis ≤ 80 Gewichts-% Ethylenoxid und ≥ 20 Gewichts-% bis ≤ 30 Gewichts-% Propylenoxid in Gegenwart von Glycerin, wobei die Gewichtsanteile sich auf das Gesamtgewicht von Ethylenoxid und Propylenoxid beziehen und die Summe der Gewichtsanteile 100 Gewichts-% beträgt.

10. Verfahren gemäß einem oder mehreren der Ansprüche 1 bis 9, wobei das oder die Polyole gemäß B) eine Hydroxylzahl von ≥ 40 mg KOH/g bis ≤ 60 mg KOH/g aufweisen und erhältlich sind durch Copolymerisation von ≥ 5 Gewichts-% bis ≤ 15 Gewichts-% Ethylenoxid und ≥ 15 Gewichts-% bis ≤ 95 Gewichts-% Propylenoxid in Gegenwart von Glycerin, wobei die Gewichtsanteile sich auf das Gesamtgewicht von Ethylenoxid und Propylenoxid beziehen und die Summe der Gewichtsanteile 100 Gewichts-% beträgt.

11. Verfahren gemäß einem oder mehreren der Ansprüche 1 bis 10, wobei das oder die Polyole gemäß C) eine Hydroxylzahl von ≥ 45 mg KOH/g bis ≤ 65 mg KOH/g aufweisen und erhältlich sind durch Copolymerisation von ≥ 10 Gewichts-% bis ≤ 20 Gewichts-% Kohlendioxid und ≥ 80 Gewichts-% bis ≤ 90 Gewichts-% Propylenoxid in Gegenwart von Glycerin, wobei die Gewichtsanteile sich auf das Gesamtgewicht von Kohlendioxid und Propylenoxid beziehen und die Summe der Gewichtsanteile 100 Gewichts-% beträgt.

12. Verfahren gemäß einem oder mehreren der Ansprüche 1 bis 11, wobei in den Polyolen A), B) und C) der molare Gesamt-Anteil von sekundären Hydroxylgruppen ≥ 50 mol-% bis ≤ 80 mol-% beträgt.

13. Polyurethanweichschaum, erhältlich durch ein Verfahren gemäß einem oder mehreren der Ansprüche 1 bis 12.

14. Polyurethanweichschaum gemäß Anspruch 13 mit einer Stauchhärte (40% Kompression) gemäß DIN EN ISO 1798 von ≥ 0,3 kPa bis ≤ 4,0 kPa.

Europäisches
Patentamt

European
Patent Office

Office européen
des brevets

## EUROPÄISCHER RECHERCHENBERICHT

Nummer der Anmeldung

EP 12 19 2196

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2012/130760 A1 (BAYER MATERIALSCIENCE AG [DE]; JACOBS GUNDOLF [DE]; MEYER-AHRENS SVEN) 4. Oktober 2012 (2012-10-04) * Seite 1, Zeilen 3-5; Beispiele 3-4 * ----- | 1-14 | INV. C08G18/44 C08G18/48 C08G64/18 C08G64/34 |
| A | US 2009/306239 A1 (MIJOLOVIC DARIJO [DE] ET AL) 10. Dezember 2009 (2009-12-10) * Beispiele 7-8 * ----- | 1-14 | |
| A | EP 0 222 453 A2 (SHELL INT RESEARCH [NL]) 20. Mai 1987 (1987-05-20) * Beispiel 11 * ----- | 1-14 | |

RECHERCHIERTE
SACHGEBIETE (IPC)

C08G

Der vorliegende Recherchenbericht wurde für alle Patentansprüche erstellt

| Recherchenort | Abschlußdatum der Recherche | Prüfer |
|---|---|---|
| Den Haag | 7. März 2013 | Bezard, Stéphane |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

..............................................................
& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 12 19 2196

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-03-2013

| Im Recherchenbericht angeführtes Patentdokument | Datum der Veröffentlichung | Mitglied(er) der Patentfamilie | Datum der Veröffentlichung |
|---|---|---|---|
| WO 2012130760 A1 | 04-10-2012 | KEINE | |
| US 2009306239 A1 | 10-12-2009 | AT 514726 T | 15-07-2011 |
| | | CN 101535364 A | 16-09-2009 |
| | | DK 2091990 T3 | 26-09-2011 |
| | | EP 2091990 A1 | 26-08-2009 |
| | | ES 2366931 T3 | 26-10-2011 |
| | | JP 2010509479 A | 25-03-2010 |
| | | KR 20090088377 A | 19-08-2009 |
| | | US 2009306239 A1 | 10-12-2009 |
| | | WO 2008058913 A1 | 22-05-2008 |
| EP 0222453 A2 | 20-05-1987 | CA 1262597 A1 | 31-10-1989 |
| | | DE 3687881 D1 | 08-04-1993 |
| | | DE 3687881 T2 | 17-06-1993 |
| | | EP 0222453 A2 | 20-05-1987 |
| | | ES 2053436 T3 | 01-08-1994 |
| | | JP 7076264 B | 16-08-1995 |
| | | JP 62115024 A | 26-05-1987 |
| | | US 4826887 A | 02-05-1989 |
| | | US 4826952 A | 02-05-1989 |
| | | US 4826953 A | 02-05-1989 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6063309 A
- FR 2172860
- US 4143004 A
- EP 1359177 A
- EP 0176013 A
- DE 1769367 A
- US 3645927 A